# EUROPÄISCHE PATENTSCHRIFT

(11) **EP 2 215 380 B1**
(45) Veröffentlichungstag und Bekanntmachung des Hinweises auf die Patenterteilung: **25.05.2011**
(21) Anmeldenummer: 08854469.7
(22) Anmeldetag: 27.11.2008
(51) Int. Cl.: F16H 15/42, F16H 57/04

(54) **Kegelreibringgetriebe**
Transmission with cones and friction ring
Transmission avec éléments coniques et anneau de friction

(30) Priorität: 27.11.2007 DE 102007057354
(43) Veröffentlichungstag der Anmeldung: 11.08.2010
(73) Patentinhaber: Rohs, Ulrich, 52351 Düren (DE)
(72) Erfinder: DRÄGER, Christoph, 52379 Langerwehe/Jüngersdorf (DE); BRANDWITTE, Werner, 52379 Langerwehe (DE)
(74) Vertreter: Reuther, Martin
(86) Internationale Anmeldenummer: PCT/DE2008/001966
(87) Internationale Veröffentlichungsnummer: WO 2009/068012

(56) Entgegenhaltungen:
- WO-A-2004/061336
- WO-A-2006/012892
- US-A- 2 807 171

## Beschreibung

Die Erfindung betrifft ein Kegelreibringgetriebe, bei welchem der Reibring über eine Verstelleinrichtung verlagerbar ist, die eine Führung aufweist, an welcher ein Versteller, wie beispielsweise eine Verstellbrücke, für den Reibring axial frei verlagerbar angeordnet ist.

Gattungsgemäße Kegelreibringgetriebe sind aus dem Stand der Technik gut bekannt, wobei die der Erfindung zu Grunde liegende Kegelreibringgetriebe insbesondere sowohl in der internationalen Patentanmeldung WO 2006/012892 A2, insbesondere in deren Figuren 39 und 49, als auch in der internationalen Patentanmeldung WO 2004/061336 A1, insbesondere in deren Figur 12, offenbart sind.

Es ist Aufgabe vorliegender Erfindung gattungsgemäße Kegelreibringgetriebe dahingehend weiterzuentwickeln, dass sie kompakter bauen und dennoch betriebssicherer zu betreiben, einfacher zu montieren und demontieren bzw. zu warten sind.

Die Aufgabe der Erfindung wird von einem Kegelreibringgetriebe gelöst, bei welchem der Reibring über eine Verstelleinrichtung verlagerbar ist, die eine Führung aufweist, an welcher ein Versteller, wie insbesondere beispielsweise eine Verstellbrücke für den Reibring axial frei verlagerbar angeordnet ist, wobei sich das Kegelreibringgetriebe dadurch auszeichnet, dass die Verstelleinrichtung einen Schneckentrieb umfasst, der die Führung verlagert. Eine derartige mit einem Schneckentrieb ausgestattete Verstelleinrichtung ermöglicht vorteilhafter Weise ein großes Übersetzungsverhältnis bei relativ kleinem Bauvolumen. Zudem gelingt es, dass die Ansteuerung des Reibringes mittels des Schneckentriebs wesentlich präzisiert werden kann.

Der Begriff "Verstelleinrichtung" beschreibt vorliegend im Wesentlichen jegliche Einrichtung, mittels welcher der Reibring gegenüber Reibkegeln des Kegelreibringgetriebes axial verstellt werden kann. Hierbei ist es nicht zwingend erforderlich, dass die Verstelleinrichtung eine Verstellbrücke, welche zwingend brückenartig ausgebildet ist, umfassen muss, es kann auch ein andersartig aufgebauter Versteller zur Anwendung kommen. Insbesondere bezeichnet der Begriff "Versteller" jede Baugruppe, welche den Reibring führt und mit diesem je nach dem Übersetzungsverhältnis axial gegenüber den Reibkegeln wandert.

Die Erfindung ist im Wesentlichen für alle Arten von Kegelreibringgetrieben vorteilhaft, wobei es insbesondere keine Rolle spielt, ob eine Kegelfläche der Reibkegel, kurz auch Kegel genannt, eine geradlinige oder eine gebogene Erzeugende aufweist.

Der Begriff "Reibring" beschreibt vorliegend jegliche Einrichtung, welche zwei Reibkegel des Reibringgetriebes insbesondere reibend miteinander verbindet, wobei der Reibring mittels der Verstelleinrichtung in einem Spalt zweier sich gegenüberliegender Reibkegel und axial zu diesen Reibkegeln vor und zurück axial bewegen kann. Idealerweise umgreift der Reibring einen der beiden Reibkegel, sodass wenigstens ein Teil eines der beiden Reibkegel innerhalb des Reibrings angeordnet ist.

Eine bevorzugte Ausführungsvariante sieht vor, dass der Schneckentrieb an einem Exzenter angreift, an welchen eine Koppelstange angeordnet ist. Vorteilhafter Weise kann einerseits mittels des Schneckentriebs und andererseits mittels des Exzenters in Verbindung mit der Koppelstange baulich einfach eine platzsparende und trotzdem betriebssichere zweifache Untersetzung realisiert werden.

Hierbei ist es vorteilhaft, wenn die Koppelstange an einer Verstellbrückenführung angreift. Beispielsweise ist ein dem Exzenter abgewandtes Ende der Koppelstange gelenkig beziehungsweise drehbeweglich an der Führung des Verstellers befestigt. Ist die Koppelstange zudem federbelastet, kann an der Verstelleinrichtung konstruktiv besonders einfach eine erste Überlastsicherung des Kegelreibringgetriebes bewerkstelligt werden.

Desweiteren ist es vorteilhaft, wenn der Schneckentrieb selbsthemmend ausgebildet ist. Speziell, wenn der Reibring des Kegelreibringgetriebes nicht verstellt werden soll, kann dann das Kegelreibringgetriebe besonders energiesparend betrieben werden, da auf Grund der Selbsthemmung des Schneckentriebs die Gefahr einer unbeabsichtigten Verstellung des Reibrings verhindert werden kann.

Eine besondere Ausführungsart der Erfindung betrifft ein Kelreibgetriebe mit einem Antriebskegel, der mit einem Antrieb über eine Formschlussverbindung wirkverbunden ist, wobei die Wirkverbindung einen Formschluss umfasst, der über eine zentrale Schraube gesichert ist.

Eine derartige Anordnung hat im Wesentlichen zwei Vorteile. Zum einen ergibt sich durch den Formschluss, der über eine zentrale Schraube gesichert ist, eine besonders gute Kraftverteilung, sodass Antriebskräfte von einem Antrieb besonders homogen in den Antriebskegel des Kegelreibringgetriebes eingeleitet werden können. Zum anderen wird insbesondere auf Grund der zentralen Schraube, welche den Formschluss zwischen dem Antriebskegel und dem Antrieb sichert, eine besonders einfache Montage des Antriebskegels an dem Antrieb erzielt.

Eine besondere Ausführungsart der Erfindung betrifft ergänzend auch ein Kegelreibringgetriebe mit einem Antriebskegel, der mit einem Antrieb über eine Formschlussverbindung wirkverbunden ist, wobei die Wirkverbindung einen Formschluss umfasst, der über eine Dehnschraube gesichert ist.

Mittels einer Dehnschraube wird insbesondere ein besonders einfacher Toleranzausgleich speziell im Bereich des Formschlusses hinsichtlich des Antriebskegels und des Antriebs erzielt. Allein hierdurch kann bereits die Lebensdauer des Kegelreibringgetriebes wesentlich erhöht werden, zumal eine Dehnschraube eine nahezu optimale und betriebssichere Montage hinsichtlich des Antriebskegels und des Antriebs sicherstellen kann. Insbesondere können etwaige Toleranzen bei der Montage aber auch über die Lebensdauer des Kegelreibringgetriebes betriebssicher und baulich einfach ausgeglichen werden.

Weist die Dehnschraube eine Klemmlänge auf, die größer als der Schraubendruchmesser ist, können mittels der Dehnschraube auch längere Distanzen zwischen einem Auflagebereich des Schraubenkopfes der Dehnschraube und einer Gewindebohrung, in welche die Dehnschraube eingeschraubt ist, überbrückt werden. Auch kommen dann die dehnenden Eigenschaften der Dehnschraube entsprechend gut zur Geltung.

Weist die Dehnschraube eine Klemmlänge auf, die wesentlich größer als der Schraubendurchmesser ist, kann die Dehnschraube vorteilhafter Weise durch einen Körper eines Reibkegels, insbesondere beispielsweise durch den Körper des Antriebskegels, hindurch gesteckt und in ein geeignetes Dehnschraubengewinde auf Seiten des Antriebs eingeschraubt werden. Hierdurch kann die Montage des Antriebskegels an den Antrieb weiter enorm vereinfacht und eine große Schraubenlänge für die Dehnschraube bereitgestellt werden.

Je nachdem wie der Reibkegel, insbesondere der Antriebskegel, des Kegelreibringgetriebes dimensioniert beziehungsweise gestaltet ist, kann es vorteilhafter Weise bereits ausreichen, wenn die Dehnschraube eine Klemmlänge aufweist, die mindestens zweimal so groß wie der Schraubendurchmesser der Dehnschraube ist.

Um die Betriebssicherheit des Kegelreibringgetriebes weiter zu erhöhen, ist es zudem vorteilhaft, wenn die Dehnschraube eine Dehnlänge aufweist, die größer als die Setzlänge des Kegelreibringgetriebes, insbesondere dessen Lagerings, ist. Mittels einer derartigen Dehnlänge kann nahezu immer gewährleistet werden, dass der Antriebskegel und der Antrieb mit einer vorbestimmten Klemmkraft miteinander verbunden sind, selbst wenn sich andere Bauteile des Kegelreibringgetriebes im Laufe des Betriebs zueinander noch setzen werden. Hierdurch kann die Betriebssicherheit des Kegelreibringgetriebes weiter wesentlich verbessert werden.

Eine besondere Ausführungsart der Erfindung betrifft ein Kegelreibringgetriebe, welches getrennte Fluidräume für eine Traktionsfluid und für eine Schmiermittelfluid sowie zwei Getriebeseiten, von denen die eine auf Seiten der Kegelspitze des Antriebskegels und die andere auf Seiten des Kegelfußes des Antriebskegels angeordnet ist, aufweist, wobei der Fluidraum für das Schmiermittelfluid zumindest zwei Teilräume aufweist und ein erster Teilraum auf der einen Getriebeseite und ein zweiter Teilraum auf der anderen Getriebeseite angeordnet ist und wobei sich das Kegelreibringgetriebe durch einen Schmiermittelkanal auszeichnet, der die beiden Teilräume verbindet und einen der Kegel durchstößt. Vorteilhafter Weise kann hierdurch auf eine separate Leitung für Schmiermittel verzichtet werden, wodurch sich der Aufbau des Kegelreibringgetriebes weiter vereinfacht.

Insbesondere in diesem Zusammenhang ist es vorteilhaft, wenn der Schmiermittelkanal zwei Kegeleingangsöffnungen zu einem rotierenden Kanalbereich mit voneinander abweichenden Durchmessern aufweist. Vorteilhafter Weise kann durch die unterschiedlichen Durchmesser fliehkraftbedingt eine Pumpwirkung erzielt werden, wodurch auf Komponenten einer externen Schmiermittelpumpe verzichtet werden kann. Hierdurch kann sich einerseits der Aufbau des Kegelreibringgetriebes vorteilhaft verringern. Andererseits kann hierdurch die Betriebssicherheit des Kegelreibringgetriebes erhöht werden, da auf zusätzliche Bauteile einer externen Schmiermittelpumpe verzichtet werden kann.

Vorteilhaft ist es zudem, wenn eine Wandung des Schmiermittelkanals im Inneren des Kegels radial weiter von der Kegelachse entfernt ist als die Wandung an der Kegeleingangsöffnung. Hierdurch kann eine fliehkraftbedingte Reinigung des Schmiermittels erfolgen, da sich Schmutzpartikel des Schmiermittels innerhalb des Kegelbereichs absetzen können.

Erweitert sich der Schmiermittelkanal innerhalb des Kegels, können Schmutzpartikel besonders gut aufgefangen werden.

Eine besonders bevorzugte Ausführungsvariante sieht in diesem Zusammenhang auch ergänzend vor. dass der Schmiermittelkanal eine Schraube durchstößt. Ist ein derartiger Schmiermittelkanal innerhalb einer Schraube vorgesehen, wird die Schraube dünnwandiger und kann somit vorteilhaft auch als Dehnschraube eingesetzt werden. Speziell kann die den Schmiermittelkanal aufweisende Schraube als Dehnschraube zum Herstellen einer Wirkverbindung eines Formschlusses zwischen dem Antriebkegel und dem Antrieb eingesetzt werden.

Eine besondere Ausführungsart der Erfindung betrifft ein Kegelreibringgetriebe mit wenigstens zwei Kegeln, die über einen Reibring miteinander wechselwirken und über einer Anpresseinrichtung zur Erzeugung einer vom Drehmoment abhängigen Anpresskraft miteinander verspannt sind, wobei die Anpresseinrichtung Wälzkörper umfasst, die in entsprechenden Wälzkörperbahnen zweier gegeneinander verlagerbarer Körper angeordnet sind, und wobei eine der Wälzkörperbahnen in einem der Kegel ausgebildet ist.

Ist eine der Wälzkörperbahnen unmittelbar in einem der Kegel eines Kegelreibringgetriebes ausgebildet, kann insbesondere die Anpresseinrichtung mit außergewöhnlich geringen Toleranzen und damit enorm spielfrei bereitgestellt werden. Auch vereinfacht sich die Montage entsprechend.

Eine besondere Ausführungsart der Erfindung betrifft ein Kegelreibringgetriebe mit wenigstens zwei Kegeln, die über einen Reibring miteinander wechselwirken, wobei wenigstens einer der Kegeln einen separaten Lagerzapfen aufweist, wobei der separate Lagerzapfen über einen zweigeteilten Sitz mit dem Kegel verbunden ist.

Mittels des separaten Lagerzapfens kann eine einfachere und betriebssichere Montage gewährleistet werden. Insbesondere durch den zweigeteilten Sitz des separaten Lagerzapfens kann die Gefahr eines Verkantens des separaten Lagerzapfens mit dem korrespondierenden Kegel minimiert werden. Aber auch ein einziger Lagersitz kann eine ausreichende Lagerung an einem Kegel gewährleisten, wenn der Lagersitz hinreichend breit ausfällt.

Vorteilhafter Weise kann eine außergewöhnlich gleichmäßige Kraftverteilung am zweigeteilten Sitz zwischen dem separaten Lagerzapfen und dem Kegel erzielt werden, wenn beide Teilsitze eine rotationssymmetrische Sitzfläche aufweisen. Auch lassen sich hierdurch der separate Lagerzapfen und der hiermit korrespondierende Kegel problemlos herstellen und aufeinander abstimmen.

Um besonders gute Hebelverhältnisse und hierdurch eine sehr hohe Stabilität bezüglich des separaten Lagerzapfens und des korrespondierenden Kegels dauerhaft gewährleisteten zu können, ist es vorteilhaft, wenn beide Teilsitze auf unterschiedlicher axialer Höhe des entsprechenden Kegels angeordnet sind.

Vorteilhafter Weise ist ein erster Teilsitz axial außen bezüglich des Kegels angeordnet und radial größer als der zweite, axial weiter innen angeordnete Teilsitz ausgebildet, wodurch der Aufbau dieser Anordnung nochmals vereinfach werden kann. Vorteilhafter Weise kann hierdurch der entsprechenden Kegel mit einer geringern Materialmenge hergestellt werden, beispielsweise mittels eines Schmiedeprozesses.

Eine besondere Ausführungsart der Erfindung betrifft ein Kegelreibringgetriebe, welches sich durch wenigstens einen geschmiedeten Kegel auszeichnet. Ein derart geschmiedeter Kegel kann gewichtsmäßig besonders leicht, mit hoher Qualität und dementsprechend langlebig bereitgestellt werden und ist dementsprechend auch unabhängig von den übrigen Merkmalen vorliegender Erfindung vorteilhaft.

Eine besondere Ausführungsart der Erfindung betrifft ein Kegelreibringgetriebe, bei welchem wenigstens einer der Kegel wenigstens eine geschmiedete Baugruppe aufweist.

Besonders hervorzuheben ist in diesem Zusammenhang, dass die Baugruppe des Kegels, welche die Kegeloberfläche bereitstellt, vorteilhafter Weise geschmiedet wird. Insbesondere eine geschmiedete Kegeloberfläche kann sich durch besonders hohe Festigkeitseigenschaften auszeichnen und kann daher die Lebensdauer und die Betriebssicherheit des vorliegenden Kegelreibringgetriebes nochmals verbessern.

Eine spezielle Ausführungsvariante sieht in diesem Zusammenhang vor, dass sämtliche Kegel geschmiedete Baugruppen aufweisen, wodurch die Betriebssicherheit des Kegelreibringgetriebes insgesamt weiter erhöht werden kann.

In Hinblick auf einen separaten Lagerzapfen, sieht eine weitere vorteilhafte Ausführungsvariante vor, dass der Kegel und der separate Lagerzapfen über einen Presssitz miteinander verbunden sind. Insbesondere hierdurch kann eine einfache, schnelle und betriebssichere Verbindung zwischen dem separaten Lagerzapfen und dem entsprechenden Kegel ausgeführt werden.

Zur Montage eines Kegelreibringgetriebes können ein separater Lagerzapfen und ein Kegel miteinander verpresst werden.

Werden ein separater Lagerzapfen und ein Kegel also miteinander verpresst, kann hinsichtlich eines Kegelreibringgetriebes eine besonders einfache, schnelle und betriebssichere Verbindung zwischen dem separaten Lagerzapfen und dem Kegel erzielt werden.

Es versteht sich, dass neben der Verbindungsart hinsichtlich des Presssitzes kumulativ oder alternativ auch weitere Verbindungsarten gewählt werden können. Insofern sieht eine weitere Ausführungsvariante vor, dass der Kegel und der separate Lagerzapfen miteinander verschweißt sind. Dementsprechend sieht eine alternative Verfahrensvariante vor, dass der separate Lagerzapfen und ein Kegel nach dem Verpressen miteinander verschweißt werden.

Hierdurch kann zusätzlich eine besonders gute Dichtigkeit an der Schnittstelle separater Lagerzapfen/Kegel erreicht werden, was insbesondere dann vorteilhaft ist, wenn der Kegel teilweise oder ganz mit Schmiermittel gefüllt ist.

Eine besondere Ausführungsart der Erfindung betrifft ein Kegelreibringgetriebe mit wenigstens zwei Kegeln, die über einen Reibring miteinander wechselwirken und über einer Anpresseinrichtung zur Erzeugung einer vom Drehmoment abhängigen Anpresskraft miteinander verspannt sind, wobei die Anpresseinrichtung zwei gegeneinander verlagerbare Körper umfasst, bei welchen wenigstens einer der verlagerbaren Körper über ein Nadellager an einem der Kegel gelagert ist.

Insbesondere die Lagerung des verlagerbaren Körpers an einem der Kegel mittels eines Nadellagers kann eine außergewöhnlich gute Sicherung gegen Kippmomente gewährleisten, sodass das Kegelreibringgetriebe mit einer besonders hohen Betriebssicherheit und Lebensdauer aufwarten kann.

Eine nochmals verbesserte Sicherung gegen ein unerwünschtes Kippen kann erzielt werden, wenn das Nadellager geteilt ausgebildet ist, sodass wenigstens zwei Nadellagerringe hinsichtlich einer Kegelrotationsachse axial nebeneinander angeordnet sind.

Eine besondere Ausführungsart der Erfindung betrifft ein Kegelreibringgtriebe mit einer eingangsseitig angeordneten Kupplung und/oder einer ausgangsseitigen Kupplung, bei welchem die Kupplung hydraulisch angesteuert ist. Eine hydraulisch angesteuerte Kupplung hat insbesondere den Vorteil, dass Baugruppen für die hydraulische Ansteuerung bauraumsparend in einen Freiraum zwischen den Kegelrotationsachsen und dem Bauraum für die Verstelleinrichtung, etwa dem Schneckentrieb, platziert werden können. Allein hierdurch können herkömmliche Kegelreibringgetriebe hinsichtlich ihres Bauvolumens wesentlich kompakter gebaut werden.

Eine besondere Ausführungsart der Erfindung betrifft ein Kegelreibringgetriebe mit wenigstens zwei Kegeln, die über einen Reibring wechselwirken und über einer Anpresseinrichtung zur Erzeugung einer vom Drehmoment abhängigen Anpresskraft miteinander verspannt sind, wobei die Anpresseinrichtung zwei gegeneinander verlagerbare Körper sowie ein Federelement umfasst und wobei sich das Kegelreibgetriebe dadurch auszeichnet, dass das Federelement ohne Entfernen der verlagerbaren Körper entfernbar ist.

Vorteilhafter Weise kann hierdurch eine hervorragend spielfreie Montage ermöglicht werden, da die entsprechende Montage ohne kritische Vorspannung beziehungsweise vollständig ohne Vorspannung vorgenommen werden.

Zur Montage eines Kegelreibgetriebes können sämtliche Kegel beidseits in ihren Lagerträgern gelagert werden und dann deren jeweiliges Federelement montiert wird. Vorteilhafter Weise lassen sich hierdurch die Kegel einfacher justieren, da zumindest bis zu diesem Montagestadium ohne Vorspannung montiert werden kann.

Eine besondere Ausführungsart der Erfindung betrifft ein Kegelreibgetriebe mit wenigstens zwei Kegeln, die über einen Reibring miteinander wechselwirken, die über einer Anpresseinrichtung zur Erzeugung einer vom Drehmoment abhängigen Anpresskraft miteinander verspannt sind und die beidseits in Lagern, welche in Lagerträgern gehalten sind, gelagert sind, wobei beide Lagerträger einstückig ausgebildet sind.

Vorteilhafter Weise ergeben sich durch eine derart gewählte Ausbildung der Lagerträger geringere Toleranzprobleme, wodurch insbesondere die Herstellung und die Montage des Kegelreibringgetriebes vereinfacht werden können. Daneben profitieren von den geringeren Toleranzproblemen auch die Betriebssicherheit und die Lebensdauer eines diesbezüglichen Kegelreibringgetriebes.

Zur Montage eines Kegelreibringgetriebes können zunächst die gegeneinander verlagerbaren Körper einer Anpresseinrichtung und dann deren Federelement montiert wird.

Da hierbei die verlagerbaren Körper idealerweise ohne jegliche kritische Vorspannung justiert werden können, erleichtert sich eine Montage eines Kegelreibringgetriebes wesentlich.

Weitere Vorteile, Ziele und Eigenschaften vorliegender Erfindung werden anhand nachfolgender Erläuterung anliegender Zeichnung beschrieben, in welcher beispielhaft ein erstes Ausführungsbeispiel eines Kegelreibringgetriebes insbesondere hinsichtlich einer Verstelleinrichtung mit einem Schneckenantrieb dargstellt ist.

In der Zeichnung zeigen:
- Figur 1: schematisch eine längs geschnittene Ansicht eines Kegelreibringgetriebes;
- Figur 2: eine Explosionszeichnung des Antriebskegels mit einer Auflaufschulter zur Sicherung des Reibringes gegen ein kritisches Auflaufen im Falle einer Störung der Verstelleinrichtung des Kegelreibringgetriebes nach der Figur 1;
- Figur 3: den Antriebskegel nach der Figur 2 in montiertem Zustand;
- Figur 4: eine Explosionszeichnung des Abtriebskegels mit einer Auflaufschulter zur Sicherung des Reibringes gegen ein kritisches Auflaufen im Falle einer Störung einer Verstelleinrichtung des Kegelreibringgetriebes nach der Figur 1;
- Figur 5: den Abtriebskegel nach Figur 4 in montiertem Zustand; und
- Figur 6: schematisch eine Ansicht auf einen Schneckentrieb der Verstelleinrichtung des Kegelreibringgetriebes nach der Figur 1.

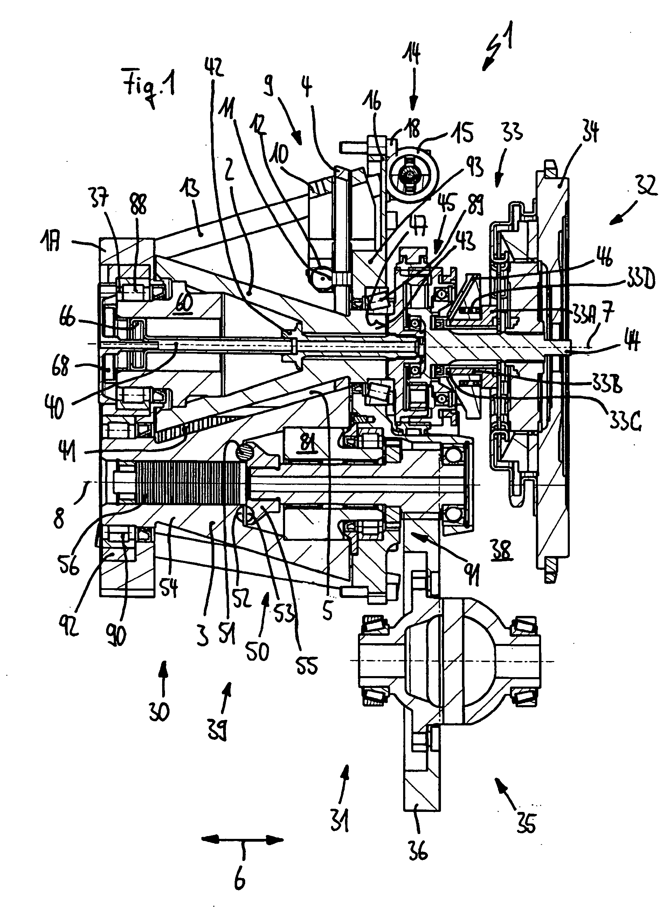

Das in der Figur 1 gezeigte Kegelreibringgetriebe 1 weist als erste wesentliche Bauteile einen Antriebskegel 2, einen Abtriebskegel 3 und ein Reibring 4 auf, wobei der Reibring 4, den Antriebskegel 2 umgreifend, in einem Spalt 5 zwischen dem Antriebskegel 2 und dem Abtriebskegel 3 gemäß des Doppelpfeiles 6 vor und zurück bewegt werden kann. Der Antriebskegel 2 kann hierbei um eine erste Rotationsachse 7 rotieren, während der Abtriebskegel 3 um eine weiter Rotationsachse 8 rotieren kann.

Damit der Reibring 4 gezielt gemäß des Doppelpfeiles 6 verstellt werden kann, ist der Reibring 4 mittels einer Verstelleinrichtung 9 verlagerbar innerhalb des Kegelreibringgetriebes 1 befestigt bzw. gehalten.

Die Verstelleinrichtung 9 umfasst im Wesentlichen eine Verstellbrücke 10, welche als Versteller wirksam ist und einen Führungsarm 11 mit mehreren Führungsrädern 12 (lediglich eines ist exemplarisch dargestellt) umfasst, mittels welcher der Reibring 4 innerhalb des Kegelreibringgetriebes 1 gehalten und geführt werden kann.

Die Verstellbrücke 10 kann hierbei entlang einer Verstellbrückenführung 13 verfahren werden, sodass der Reibring 4 in dem Spalt 5 gemäß des Doppelpfeiles 6 vor und zurück bewegt werden kann. Die Verstellbrückenführung 13 verläuft bei diesem Ausführungsbeispiel fluchtend zu dem Spalt 5, wodurch der Reibring 4 präzise entlang und innerhalb des Spaltes 5 bewegt werden kann.

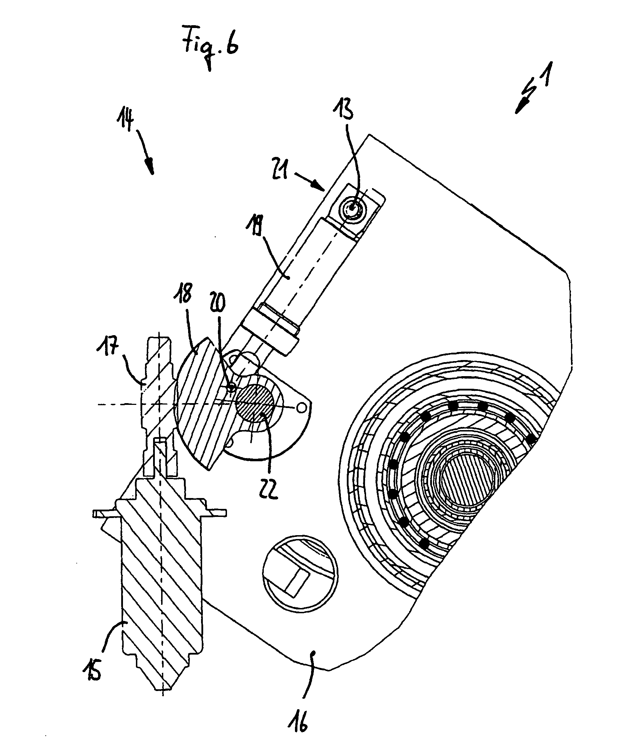

Um ein Wandern des Reibringes 4 innerhalb des Spaltes 5 zu initiieren, reicht es bereits aus, wenn die Verstellbrückenführung 13 in an sich bekannter Weise lediglich um ein geringes Maß hinsichtlich ihrer Lage verlagert wird. Hierzu umfasst die Verstelleinrichtung 9 einen Antrieb 14. der als Schneckenantrieb 15 ausgebildet ist. Der Aufbau des Antriebes 14 des vorliegenden Kegelreibringgetriebes 1 kann besonders gut anhand der Darstellung nach der Figur 6 nachvollzogen werden.

Der Schneckenantrieb 15 ist an einer Gehäusewandung 16 des Kegelreibringgetriebes 1 befestigt und treibt eine selbsthemmende Schnecke 17 als Schneckentrieb an. Die selbsthemmende Schnecke 17 wiederum steht mit einem Exzenter 18 im Eingriff, an welchem eine federbelastete Koppelstange 19 befestigt ist. Die federbelastete Koppelstange 19 ist einerseits in einem Anlenkpunkt 20 mit dem Exzenter 18 verbunden. Andererseits ist die federbelastete Koppelstange 19 an ihrem dem Exzenter 18 abgewandten Ende 21 mit der Verstellbrückenführung 13 verbunden.

Treibt der Schneckenantrieb 15 nun die selbsthemmende Schnecke 17 an, kann der Exzenter 18 um eine Exzenterwelle 22 geschwenkt werden, wodurch sich wiederum die federbelastete Koppelstange 19 bewegt. Diese Bewegung der federbelasteten Koppelstange 19 überträgt sich auf die Verstellbrückenführung 13, wodurch ein Wandern der Verstellbrücke 10 mitsamt dem Reibring 4 ausgelöst oder auch wieder gestoppt werden kann.

Vorteilhafter Weise wird mittels eines derartigen Schneckenantriebs 15 mit einer selbsthemmenden Schnecke 17 und einem Exzenter 18 sowie einer federbelasteten Koppelstange 19 zumindest eine zweifache Untersetzung hinsichtlich des Antriebs 14 erzielt, sodass die Verstellbrückenführung 13 mit minimalen Antriebswegen betriebssicher verstellt werden kann.

Die federbelastete Koppelstange 19 hat zudem den Vorteil, dass mit ihr konstruktiv einfach eine Überlastsicherung des Kegelreibringgetriebes 1 realisiert werden kann, wodurch die federbelastete Koppelstange 19 insbesondere die Verstellbrückenführung 13 während eines kritischen Betriebszustandes des Kegelreibringgetriebes 1 mittels einer vorbestimmten Federkraft immer derart verstellen kann, dass sich am Kegelreibringgetriebe 1 hinsichtlich des Reibringes 4 und der beiden Reibkegel 2 und 3 stets automatisch Notlaufeigenschaften einstellen können.

Die selbsthemmende Schnecke 17 bietet speziell den Vorteil, dass der Reibring 4 besonderes energiesparend in seiner Position gehalten werden kann, da die Selbsthemmung der selbsthemmenden Schnecke 17 vorteilhafter Weise derart gewählt werden kann, dass eine Verstellung des Exzenters 18 ohne den Schneckenantrieb 15 nicht oder nur unter bestimmten Umständen vorgenommen werden kann.

Zurückkehrend zu der Darstellung nach der Figur 1 ist weiter gut zu erkennen, dass das Kegelreibringgetriebe 1 im Wesentlichen in eine erste Getriebeseite 30 und in eine zweite Getriebeseite 31 unterteilbar ist. Während der ersten Getriebeseite 30 im Wesentlichen Lagerkomponenten und einem zwischen der ersten Getriebeseite 30 und der zweiten Getriebeseite 31 angeordneten Kegelraum als erste wichtigste Komponenten des Kegelreibringgetriebes im Wesentlichen die beiden Reibkegel 2 und 3, der Reibring 4 mit der Verstelleinrichtung 9 zuzuordnen sind, können der zweiten Getriebeseite 31 antriebsseitig 32 eine Kupplung 33 mit einer Schwungmasseneinrichtung 34 sowie abtriebsseitig 35 ein Differentialgetriebe 36 zugeordnet werden.

Die hier verwendete Kupplung 33 ist aus dem Stand der Technik bereits gut bekannt, insofern sind diesbezüglich lediglich ein Zentralausrücker 33A ein hiermit korrespondierender Ausrückerkolben 33B, ein Ausrückerzylinder 33C und eine hierfür entsprechend stark ausgelegte Ausrückerfeder 33D beziffert.

An der ersten Getriebeseite 30 ist ein erster Schmiermittelteilraum 37 ausgebildet, während an der zweiten Getriebeseite 31 ein zweiter Schmiermittelteilraum 38 ausgebildet ist. Beide Schmiermittelteilräume 37 und 38 gehören einem ersten Fluidraum 39 des Kegelreibringgetriebes 1 an und sind mittels eines Schmiermittelkanals 40 räumlich miteinander verbunden. Innerhalb des ersten Fluidraums 39 und damit auch innerhalb der Schmiermittelteilräume 37 und 38 befindet sich ein Schmiermittelfluid, welches insbesondere die Wälzlagereinrichtungen des Kegelreibringgetriebes 1 schmieren kann. Dagegen befindet sich in einem weiteren Fluidraum 41, der in dem Kegelraum ausgebildet ist und der beispielsweise auch den Spalt 5 des Kegelreibringgetriebes 1 umfassen kann, ein Traktionsfluid des Kegelreibringgetriebes 1, welches hinsichtlich einer Traktion zwischen den beiden Reibkegeln 2 und 3 und dem Reibring 4 unterstützend wirken kann.

Vorteilhafter Weise kann mittels des vorliegenden Schmiermittelkanals 40 auf weitere externe Zu- und/oder Ableitungen für das Schmiermittelfluid verzichtet werden, insbesondere wenn der Schmiermittelkanal 40 zumindest den Antriebskegel 2 durchstößt. Vorteilhafter Weise setzt sich der Schmiermittelkanal 40 selbst durch eine zentrale Dehnschraube 42 hindurch fort, mittels welcher insbesondere eine Formschlussverbindung 43 zwischen dem Antriebskegel 2 und einer Antriebseinrichtung 44 des Kegelreibringgetriebes gesichert ist. Durch die derart aufgebaute zentrale Dehnschraube 42 verlängert sich der Schmiermittelkanal 40 bis in einen Bereich 45, in welchem eine hydraulische Schmiermittelfluidzuleitung 46 münden kann.

Desweiteren ist die zentrale Dehnschraube 42 mit einer Klemmlänge ausgestattet, die mindestens zweimal so groß ist wie der Schraubendurchmesser der Dehnschraube 42, wobei die Klemmlänge als wesentlich größer als der Schraubendurchmesser der Dehnschraube 42 bezeichnet werden kann. Insbesondere weist die Dehnschraube 42 eine Dehnlänge auf, welche größer als die Setzlänge des Kegelreibringgetriebes 1 ist. Somit kann betriebssicher gewährleistet werden, dass hinsichtlich der Formschlussverbindung 43 eine Stirnverzahnung 47 des Antriebskegels 2 immer ausreichend mit einer komplementären Verzahnung (hier nicht beziffert) der Antriebseinrichtung 44 in Eingriff gehalten werden kann. In diesem Zusammenhang versteht es sich, dass in einer alternativen Ausführungsform in der Dehnschraube auf einen Schmiermittelkanal verzichtet werden kann.

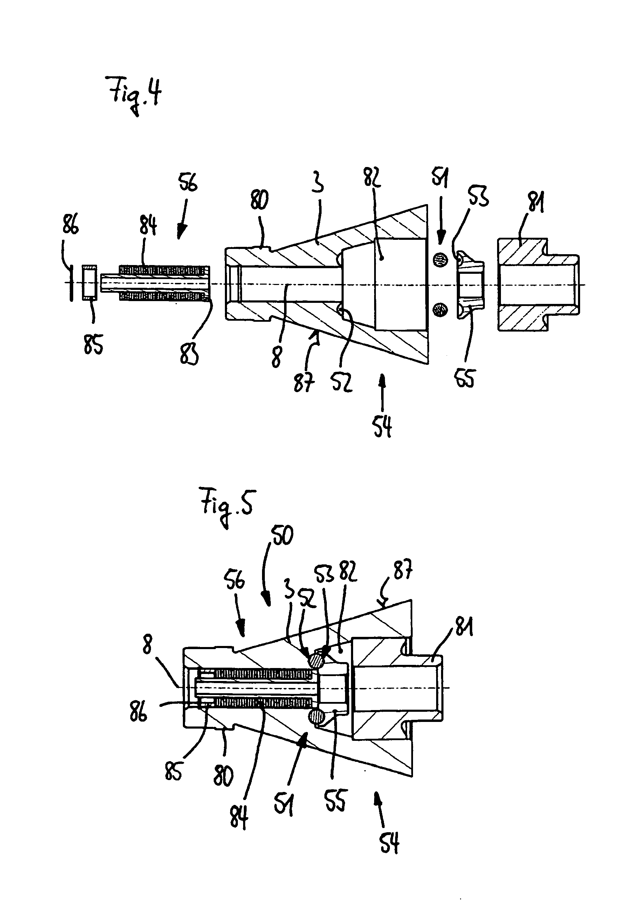

Der Abtriebskegel 3 weist desweiteren eine Anpresseinrichtung 50 (siehe insbesondere auch Figuren 4 und 5) auf, mittels welcher eine vom Drehmoment abhängige Anpresskraft erzeugt werden kann. Die Anpresseinrichtung 50 umfasst hierbei Wälzkörper 51, welche in entsprechenden Wälzkörperbahnen 52 und 53 zweier gegeneinander verlagerbarer Körper 54 bzw. 55 angeordnet sind. Vorteilhafter Weise ist hierbei die erste Wälzkörperbahn 52 unmittelbar innerhalb des Abtriebkegels 3 eingelassen, sodass Abtriebskegel 3 und verlagerbarer Körper 54 durch eine Baugruppe realisiert sind und eine besonders spielfreie Anpresseinrichtung 50 an dem Kegelreibringgetriebe 1 umgesetzt ist. Darüber hinaus umfasst die Anpresseinrichtung 50 noch ein Federelement 56, welches eine Vorspannung in der Anpresseinrichtung 50 aufbauen kann.

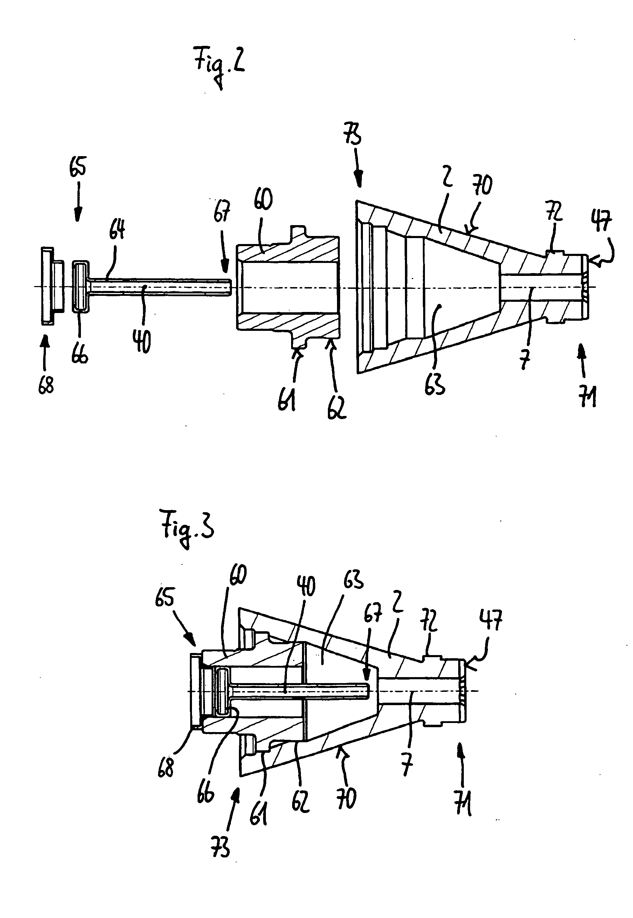

Der spezielle Aufbau des Antriebskegels 2 kann insbesondere den Darstellungen nach den Figuren 2 und 3 entnommen werden. Der Antriebskegel 2 umfasst einen separaten Lagerzapfen 60, der einen ersten Lagersitz 61 und einen zweiten Lagersitz 62 umfasst, sodass der separate Lagerzapfen 60 insgesamt im Inneren 63 des Antriebskegels 2 besonders kippsicher befestigt werden kann. Gegebenfalls kann der separate Lagerzapfen 60, nachdem er in den Antriebskegel 2 eingepresst wurde, zusätzlich noch verschweißt werden, wodurch der separate Lagerzapfen 60 und der Antriebskegel 2 gegeneinander noch besonders flüssigkeitsdicht abgedichtet sind.

Der erste Lagersitz 61 weist hierbei einen größeren Durchmesser auf als der zweite Lagersitz 62, jedoch haben beide Lagersitze 61 und 62 eine rotationssymmetrische Sitzfläche. Dadurch, dass die beiden Lagersitze 61 und 62 axial auf unterschiedlicher Höhe angeordnet sind, ergeben sich gute Hebelverhältnisse, sodass der Antriebskegel 2 außergewöhnlich kippsicher auf dem separaten Lagerzapfen 60 aufgepresst werden kann.

In den separaten Lagerzapfen 60 kann zudem noch ein rotierender Einsatz 64 zum Reduzierung der Schmiermitteltluidmenge, insbesondere der in dem Kegel rotierten Schmiermittelfluidmenge, eingesetzt werden. An einem ersten Ende 65 des rotierenden Einsatzes 64 ist noch eine Fliehkraftfalle 66 vorgesehen, mittels welcher Schmutzpartikel aus dem Schmiermittelfluid aufgefangen werden können. Hierdurch erhält der rotierende Einsatz 64 am ersten Ende 65 einen größeren Durchmesser als an einem weiteren Ende 67, welches dem ersten Ende 65 gegenüber liegt. Dem ersten Ende 65 des rotierenden Einsatzes 64 ist zudem eine zusätzliche rotierende Einrichtung 68 zur weiteren Erhöhung eines Öffnungsdurchmessers insbesondere des Schmiermittelskanals 40 zugeordnet.

Desweiteren verfügt der Antriebskegel 2 als geschmiedetes Bauteil über eine geschmiedete Kegeloberfläche 70, welche an einer Antriebskegelspitze 71 im Bereich einer Auflaufschulter 72 endet. Die Auflaufschulter 72 ist zur Sicherung des Reibringes 4 vorgesehen, sodass der Reibring 4 die Kegeloberfläche 70 bei einer Störung des Kegelreibringgetriebes 1 nicht verlassen kann. Im Bereich des Kegelfußes 73 fehlt eine derartige Auflaufschulter 72 an dem Antriebskegel 2, da an dem gegenüber liegenden Abtriebskegel 3 eine entsprechende weitere Auflaufschulter 80 (siehe insbesondere Figuren 4 und 5) angeordnet ist, gegen welche der Reibring 4 bei einer kritischen Betriebssituation des Kegelreibringgetriebes 1 auflaufen kann. Somit verfügt jeder Antriebskegel 2 bzw. 3 nur genau über eine Auflaufschulter 72 bzw. 80.

Wie aus den Detaildarstellungen der Figuren 4 und 5 gut ersichtlich ist, wird der Abtriebskegel 3 mit einem weiteren separaten Lagerzapfen 81 verpresst, wobei der weitere separate Lagerzapfen 81 in das Innere 82 des Abtriebskegels 3 eingepresst ist (siehe Figur 5).

Desweiteren befindet sich im Inneren 82 des Abtriebskegels 3 noch der zweite Anpresskörper 55, der die zweite Wälzkörperbahn 53 für die Wälzkörper 51 umfasst. Eine zu der zweiten Wälzkörperbahn 53 korrespondierende erste Wälzkörperbahn 52 ist hingegen unmittelbar in dem Abtriebskegel 3 integriert, sodass der Abtriebskegel 3 selbst direkt den ersten Anpresskörper 54 bildet.

Ebenfalls in das Innere des Abtriebskegels 3 ist die Federeinrichtung 56 eingelassen, wobei die Federeinrichtung 56 im Wesentlichen einen Federhalter 83 und eine Vielzahl 84 an Tellerfedern, welche auf den Federhalter 83 aufgeschoben sind, sowie einen Distanzring 85 umfasst. Die Federeinrichtung 56 ist mittels einer Sicherungsscheibe 86 innerhalb des Abtriebskegels 3 gesichert.

Der Abtriebskegel 3 weist als ebenfalls geschmiedetes Bauteil eine weitere geschmiedete Kegeloberfläche 87 auf, sodass auch der Abtriebskegel 3 hoch belastbar ist.

Beide Reibkegel 2 und 3 sind hierbei in spezieller Weise an einem Gehäuse 1A des Kegelreibringgetriebes 1 gelagert, sodass insbesondere eine Montage der Reibkegel 2 und 3 vorteilhaft vorgenommen werden kann. Einerseits ist der Antriebskegel 2 mit einem ersten Antriebskegellager 88 und mit einem zweiten Antriebskegellager 89 gelagert. Andererseits ist der Abtriebskegel 3 mit einem ersten Abtriebskegellager 90 und mit einem zweiten Abtriebskegellager 91 gelagert.

Das erste Antriebskegellager 88 und das erste Abtriebskegellager 90 befinden sich gemeinsam auf der ersten Getriebeseite 30. Das zweite Antriebskegellager 89 und das zweite Abtriebskegellager 91 sind gemeinsam auf der zweiten Getriebeseite 31 angeordnet.

Vorteilhafter Weise werden das erste Antriebskegellager 88 und das ersten Abtriebskegellager 90 beide von einem ersten gemeinsamen Lagerträger 92 des Kegelreibringgetriebes 1 gehalten. Dementsprechend werden das zweite Antriebskegellager 89 und das zweite Abtriebskegellager 91 beide von einem weiteren gemeinsamen Lagerträger 93 des Kegelreibringgetriebes 1 gehalten. Hierdurch ergeben sich wesentlich geringere Toleranzprobleme, sodass beide Reibkegel 2 und 3 exakter zueinander positioniert werden können. Dies trifft umso mehr zu, da sowohl der erste gemeinsame Lagerträger 92 als auch der weitere gemeinsame Lagerträger 93 jeweils einstückig ausgebildet sind. Insofern können Lageraugen (hier nicht beziffert) für die entsprechenden Lagerpaarungen 88 und 90 sowie 89 und 91 mit den Lagerträgern 92 bzw. 93 wesentlich exakter an dem Kegelreibringgetriebe 1 vorgesehen werden. Hierbei kann der weitere gemeinsame Lagerträger 93 mit der vorstehend beschriebenen Gehäusewandung 16 gemeinsam ausgebildet sein, wodurch das Kegelreibringgetriebe 1 nochmals steifer gestaltet werden kann.

### Bezugszeichenliste:

- 1: Kegelreibringgetriebe
- 1A: Gehäuse
- 2: Antriebskegel
- 3: Abtriebskegel
- 4: Reibring
- 5: Spalt
- 6: Doppelpfeil
- 7: erste Rotationsachse
- 8: weitere Rotationsachse
- 9: Verstelleinrichtung
- 10: Verstellbrücke
- 11: Führungsarm
- 12: Führungsrad
- 13: Verstellbrückenführung
- 14: Antrieb
- 15: Schneckenantrieb
- 16: Gehäusewandung
- 17: selbsthemmende Schnecke
- 18: Exzenter
- 19: federbelastete Koppelstange
- 20: Anlenkpunkt
- 21: abgewandtes Ende
- 22: Exzenterwelle

- 30: erste Getriebeseite
- 31: zweite Getriebeseite
- 32: antriebsseitig
- 33: Kupplung
- 33A: Zentralausrücker
- 33B: Ausrückerkolben
- 33C: Ausrückerzylinder
- 33D: Ausrückerfeder
- 34: Schwungmasseneinrichtung
- 35: abtriebsseitig
- 36: Differentialgetriebe
- 37: erster Schmiermittelteilraum
- 38: weitere Schmiermittelteilraum
- 39: erster Fluidraum
- 40: Schmiermittelkanal
- 41: weiterer Fluidraum
- 42: zentrale Dehnschraube
- 43: Formschlussverbindung
- 44: Antriebseinrichtung
- 45: Bereich
- 46: hydraulische Schmiermittelfluid- zuleitung
- 47: Stirnverzahnung

- 50: Anpresseinrichtung
- 51: Wälzkörper
- 52: erste Wälzkörperbahn
- 53: zweite Wälzkörperbahn
- 54: erster Anpresskörper
- 55: zweiter Anpresskörper
- 56: Federeinrichtung

- 60: separater Lagerzapfen
- 61: erster Lagersitz
- 62: zweiter Lagersitz
- 63: Inneres des Antriebskegels
- 64: rotierender Einsatz
- 65: erstes Ende
- 66: Fliehkraftfalle
- 67: weiteres Ende
- 68: zusätzliche rotierende Einrich- tung

- 70: geschmiedete Kegeloberfläche
- 71: Antriebskegelspitze
- 72: Auflaufschulter
- 73: Antriebskegelfuß

- 80: weitere Auflaufschulter
- 81: weiterer separater Lagerzapfen
- 82: Inneres des Abtriebskegels
- 83: Federhalter
- 84: Vielzahl an Tellerfedern
- 85: Distanzring
- 86: Sicherungsscheibe
- 87: weitere geschmiedete Kegelober- fläche
- 88: erstes Antriebskegellager
- 89: zweites Antriebskegellager
- 90: erstes Abtriebskegellager
- 91: zweites Abtriebskegellager
- 92: erster gemeinsamer Lagerträger
- 93: weiterer gemeinsamer Lagerträ- ger

## Patentansprüche

1. Kegelreibringgetriebe (1), bei welchem der Reibring (4) über eine Verstelleinrichtung (9) verlagerbar ist, die eine Führung aufweist, an welcher ein Versteller (10) für den Reibring (4) axial frei verlagerbar angeordnet ist, **dadurch gekennzeichnet, dass** die Verstelleinrichtung (9) einen Schneckentrieb (17) umfasst, der die Führung verlagert.

2. Kegelreibringgetriebe (1) nach Anspruch 1, **dadurch gekennzeichnet, dass** der Schneckentrieb (17) an einem Exzenter (18) angreift, an welchem eine Koppelstange (19) angeordnet ist, und die Koppelstange (19) an der Führung (13) des Verstellers angreift.

3. Kegelreibringgetriebe (1) nach Anspruch 2, **dadurch gekennzeichnet, dass** der Schneckentrieb (17) mittels des Exzenters (18) in Verbindung mit der Koppelstange (19) eine zweifache Untersetzung aufweist.

4. Kegelreibringgetriebe (1) nach den Ansprüchen 2 oder 3, **dadurch gekennzeichnet, dass** die Koppelstange (19) federbelastet ist.

5. Kegelreibringgetriebe (1) nach einem der vorstehenden Ansprüche, **dadurch gekennzeichnet, dass** der Schneckentrieb (17) selbsthemmend ausgebildet ist.

## Claims

1. A bevel friction ring gearing (1), in which the friction ring (4) is displaceable via an adjustment device (9), which has a guide, on which an adjuster (10) for the friction ring (4) is situated so it is freely axially displaceable, **characterized in that** the adjustment device (9) comprises a worm drive (17), which displaces the guide.

2. The bevel friction ring gearing (1) according to Claim 1, **characterized in that** the worm drive (17) engages on an eccentric (18), on which a coupling rod (19) is situated, and the coupling rod (19) engages on the guide (13) of the adjuster.

3. The bevel friction ring gearing (1) according to Claim 2, **characterized in that** the worm drive (17), using the eccentric (18) in combination with the coupling rod (19), has a twofold gear reduction.

4. The bevel friction ring gearing (1) according to Claims 2 or 3, **characterized in that** the coupling rod (19) is spring-loaded.

5. The bevel friction ring gearing (1) according to one of the preceding claims, **characterized in that** the worm drive (17) is implemented as self-locking.

## Revendications

1. Engrenage à anneau de friction conique (1), sur lequel l'anneau à friction (4) peut être déplacé au moyen d'un dispositif de réglage (9), qui présente un guide sur lequel un variateur (10) pour l'anneau à friction (4) est disposé de façon à pouvoir se déplacer librement dans le sens axial, **caractérisé en ce que** le dispositif de réglage (9) comprend un engrenage à vis sans fin (17) qui déplace le guide.

2. Engrenage à anneau de friction conique (1) selon la revendication 1, **caractérisé en ce que** l'engrenage à vis sans fin (17) s'applique sur un excentrique (18), sur lequel est disposée une tige de couplage (19), et la tige de couplage (19) s'applique sur le guide (13) du variateur.

3. Engrenage à anneau de friction conique (1) selon la revendication 2, **caractérisé en ce que** l'engrenage à vis sans fin (17) présente une double démultiplication au moyen de l'excentrique (18) en liaison avec la tige de couplage (19).

4. Engrenage à anneau de friction conique (1) selon les revendications 2 ou 3, **caractérisé en ce que** la tige de couplage (19) est sollicitée par ressort.

5. Engrenage à anneau de friction conique (1) selon l'une quelconque des revendications précédentes, **caractérisé en ce que** l'engrenage à vis sans fin (17) est conçu de façon autobloquante.
